# FASCICULE DE BREVET EUROPEEN

(11) **EP 3 092 375 B1**
(45) Date de publication et mention de la délivrance du brevet: **13.12.2017**
(21) Numéro de dépôt: 15702542.0
(22) Date de dépôt: 08.01.2015
(51) Int. Cl.: F01D 25/24, F02C 7/25

(54) **PROTECTION CONTRE LE FEU D'UN CARTER DE SOUFFLANTE EN MATÉRIAU COMPOSITE**
BRANDSCHUTZ EINES VENTILATORGEHÄUSES AUS VERBUNDWERKSTOFF
FIRE PROTECTION OF A FAN CASING MADE OF COMPOSITE

(30) Priorité: 09.01.2014 FR 1450145
(43) Date de publication de la demande: 16.11.2016
(73) Titulaire: SNECMA, 75015 Paris (FR)
(72) Inventeur: CORRADINI, Sylvain, F-77550 Moissy-Cramayel Cedex (FR); ELISSEEFF, Timothée, F-77550 Moissy-Cramayel Cedex (FR); ESSAYAN, Sophie, F-77550 Moissy-Cramayel Cedex (FR)
(74) Mandataire: Regimbeau
(86) Numéro de dépôt international: PCT/FR2015/050041
(87) Numéro de publication internationale: WO 2015/104504

(56) Documents cités:
- EP-A2- 2 447 508
- GB-A- 2 486 404

## Description

### DOMAINE DE L'INVENTION

L'invention concerne de manière générale un carter de turbine à gaz, et plus particulièrement un carter de rétention pour soufflante de turbine à gaz pour un moteur aéronautique en matériau composite comprenant un renfort fibreux densifié par une matrice et son procédé de fabrication associé.

### ARRIERE-PLAN TECHNOLOGIQUE

Le carter de soufflante d'un moteur aéronautique à turbine à gaz peut remplir plusieurs fonctions. Il définit la veine d'entrée d'air dans le moteur, supporte un matériau abradable en regard des sommets d'aubes de soufflante, supporte une structure généralement sous forme de panneaux acoustiques pour l'atténuation des ondes sonores en entrée du moteur et incorpore ou supporte un bouclier de rétention de débris projetés sur la face interne du carter tels que des objets ingérés ou des débris d'aubes endommagées.

De façon courante, un carter de soufflante comprend une paroi relativement mince définissant la veine d'entrée d'air. Le carter peut notamment être réalisé en métal ou dans un matériau composite. Par exemple, il a été proposé dans le document FR 2 913 053 de réaliser le carter de soufflante en matériau composite d'épaisseur variable, par formation d'un renfort fibreux et densification du renfort par une matrice. Le renfort fibreux est formé par un enroulement en couches superposées sur un mandrin d'une texture fibreuse obtenue par tissage tridimensionnel avec épaisseur évolutive, afin d'intégrer le bouclier de rétention par simple augmentation localisée d'épaisseur.

Le renfort fibreux comprend des fibres, notamment en carbone, verre, aramide ou céramique. La matrice quant à elle est typiquement une matrice polymère, par exemple époxyde, bismaléimide ou polyimide.

Le carter peut être réalisé en une seule pièce et comprend au niveau de ses extrémités axiales des brides. Une première bride, dite amont, permet la fixation d'une manche d'entrée d'air au carter, tandis que la deuxième bride, dite aval, permet le raccordement du carter de soufflante avec un carter intermédiaire au moyen d'organes de liaison du type vis-écrous, avec interposition d'une virole annulaire appliquée contre la face aval de la bride aval. Ici, l'amont et l'aval sont définis par le sens d'écoulement des gaz dans la turbomachine. Le carter intermédiaire est en métal, en titane, dans un alliage métallique à base de titane ou encore en aluminium, de même que la virole annulaire et la manche d'entrée d'air.

A l'usage, il s'avère que certains cas de pannes peuvent entrainer une augmentation de la température environnant le carter de soufflante pouvant nuire à son bon fonctionnement, notamment dans le cas où le renfort fibreux est formé à partir d'une texture fibreuse tridimensionnelle. En effet, le matériau utilisé actuellement pour les carters en matériau composite n'est pas intrinsèquement auto-extinguible ou ignifugeant. Par ailleurs, les fibres orientées dans la troisième direction du renfort maintiennent la structure et limitent sa délamination. Toutefois, ces fibres orientées dans la troisième direction transmettent la chaleur de la flamme au sein de la matière, ce qui qui favorise le maintien de la flamme.

Il est donc nécessaire de protéger le carter de soufflante contre ces températures extrêmes, et de manière plus générale contre le feu, en limitant l'échauffement de la structure pour permettre son extinction, afin que le carter soit capable de conserver ses propriétés mécaniques durant et après l'augmentation de température et de ralentir le cas échéant la propagation du feu suite au retrait de la flamme.

Il a donc été proposé de rapporter des contreplaques en titane, matériau moins sensible au feu, entre le carter de soufflante et Les pièces adjacentes amont et aval. Néanmoins, cette solution augmente la masse globale du moteur. Par ailleurs, les tolérances de fabrication sont importantes en raison du procédé de fabrication (formage à chaud de la contreplaque), qui est en outre difficile à mettre en oeuvre et donc très coûteux.

Il a également été proposé de rapporter, par tissage sur la préforme destinée à former le renfort fibreux, une tresse rigide ou semi-rigide en fibres de verre, qui est ensuite co-injectée avec la préforme du carter de soufflante. Toutefois, cette solution s'avère délicate en ce qui concerne le maintien de la protection lors de son introduction dans le moule. De plus, l'étape de tissage s'avère difficile à mettre en oeuvre.

Il a également été proposé, dans le document GB 2 486 404, de projeter à chaud du cuivre ou un alliage de cuivre sur la surface externe du fût du carter en matériau composite, afin de diffuser la température de la flamme et de protéger ainsi le carter contre le feu.

Enfin, le document EP 2 447 508 propose de rapporter des panneaux réalisé dans un matériau retardant ou isolant les flammes, afin de protéger une pièce d'un moteur. A cet effet, les panneaux sont rapportés et fixés à l'aide de moyens de fixation sur la surface de la pièce à protéger. Ce document n'adresse cependant pas spécifiquement la problématique des carters en matériau composite.

### RESUME DE L'INVENTION

Un objectif de l'invention est donc d'améliorer la protection d'un carter de soufflante d'une turbomachine en matériau composite contre les températures extrêmes et le feu, de manière industrialisable, fiable et efficace.

Pour cela, l'invention propose un procédé de protection contre le feu d'un carter de soufflante comprenant un fût globalement cylindrique présentant une direction principale s'étendant selon un axe longitudinal et une bride amont s'étendant radialement par rapport à l'axe longitudinal depuis une extrémité amont du fût, le carter de soufflante étant réalisé dans un matériau composite comprenant un renfort fibreux densifié par une matrice, ladite matrice étant polymérisée,

le procédé de protection comprenant les étapes suivantes :
- draper, sur une face radiale amont de la bride amont, des lés comprenant des fibres de verre pré-imprégnées avec une résine capable de protéger thermiquement le carter de soufflante contre le feu, et
- polymériser la résine afin d'obtenir une couche de protection.

Certaines caractéristiques préférées mais non limitatives du procédé de protection contre le feu d'un carter de soufflante décrit ci-dessus sont les suivantes :
- des lés supplémentaires sont également drapés sur une face externe du fût,
- des lés supplémentaires sont également drapés sur un sommet de la bride amont,
- des lés supplémentaires sont également drapés contre une face interne du fût, dans une partie adjacente à la bride amont,
- davantage de lés supplémentaires sont drapés sur la face radiale amont de la bride amont que sur la face interne du fût dans la partie adjacente à la bride amont,
- les lés supplémentaires sont polymérisés afin de former des couches de protection supplémentaires contre le feu, de préférence en même temps que les lés drapés sur la face radiale amont de la bride amont,
- le procédé comprend en outre, suite à l'étape de polymérisation, une étape au cours de laquelle une contreplaque annulaire en titane est fixée sur une face radiale aval de la bride amont,
- la résine comprend une résine epoxy, une résine phénolique et/ou une résine cyanate ester, telle qu'une résine du type HexPly®M26T/50%035,
- le procédé comprend en outre une étape d'usinage de la face radiale amont de la bride amont afin d'ajuster l'épaisseur de la couche de protection,
- le carter de soufflante comprenant en outre une bride aval, et le procédé comprend en outre une étape au cours de laquelle une barrière contre la corrosion galvanique est appliquée contre une surface aval de la bride aval, et
- la barrière contre la corrosion galvanique est appliquée selon les étapes suivantes : draper, sur une face radiale aval de la bride aval, et éventuellement sur le sommet, des lés comprenant des fibres de verre pré-imprégnées avec une résine capable de protéger le carter de soufflante, et polymériser la résine afin d'obtenir une couche de protection.

L'invention propose également un carter de soufflante réalisé dans un matériau composite comprenant un renfort fibreux densifié par une matrice, ledit carter de soufflante comprenant un fût globalement cylindrique présentant une direction principale s'étendant selon un axe longitudinal, une bride amont s'étendant radialement par rapport à l'axe longitudinal depuis une extrémité amont du fût, et une couche de protection sur une face radiale amont obtenue suivant un procédé de protection comme décrit ci-dessus.

Selon un aspect préféré mais non limitatif, le carter de soufflante décrit ci-dessus comprend en outre une bride aval s'étendant radialement par rapport à l'axe longitudinal depuis une extrémité aval du fût et une barrière contre la corrosion galvanique appliquée sur une face radiale aval.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

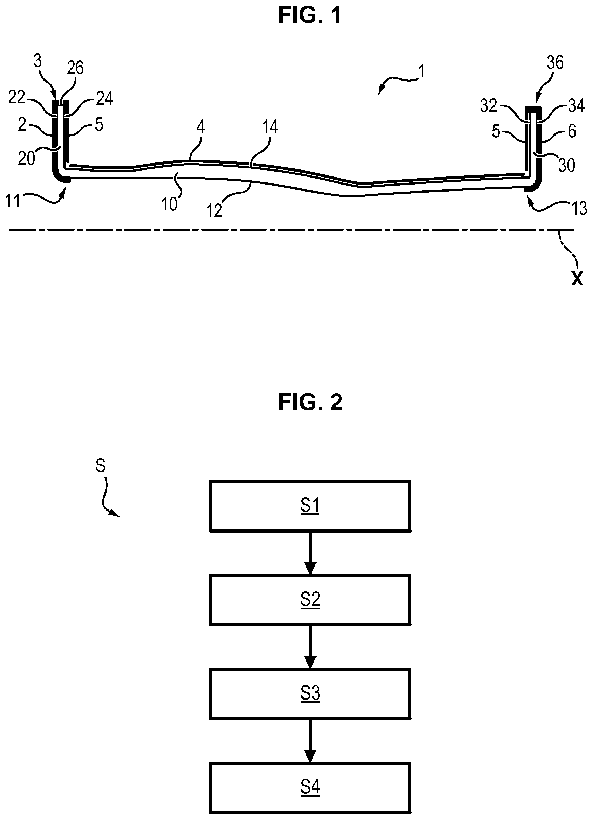

La figure 1 est une vue partielle en coupe transversale d'un exemple de carter de soufflante conforme à l'invention,
La figure 2 est un organigramme représentant différentes étapes d'un exemple de réalisation du procédé de protection d'un carter de soufflante conforme à l'invention.

### DESCRIPTION DETAILLEE D'UN MODE DE REALISATION

Un moteur à turbine à gaz comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Les turbines sont couplées au compresseur et à la soufflante par des arbres coaxiaux respectifs.

Le moteur est logé à l'intérieur d'un carter comprenant plusieurs parties correspondant à différents éléments du moteur. Ainsi, la soufflante est entourée par exemple par un carter de soufflante, qui est connecté en amont à une manche d'entrée d'air et en aval à une virole annulaire d'un carter intermédiaire.

Le carter de soufflante 1 comprend un fût 10 globalement cylindrique, présentant une direction principale s'étendant selon un axe longitudinal X sensiblement parallèle à l'écoulement des gaz. Le fût 10 du carter peut présenter une épaisseur variable, comme indiqué dans le document FR 2 913 053, et peut être muni d'une bride amont 20 et d'un bride aval 30 au niveau de ses extrémités amont et aval, respectivement, afin de permettre son montage et sa liaison avec d'autres pièces, dont la manche d'entrée d'air, le carter intermédiaire ou encore la virole annulaire.

La bride amont 20 et la bride aval 30 sont de forme annulaire et s'étendent radialement par rapport à l'axe longitudinal X du carter de soufflante 1.

La bride amont 20 comprend une face radiale amont 22 (en regard de l'écoulement) et une face radiale aval 24 (en regard de la bride aval 30). La bride amont 20 comprend en outre un sommet annulaire 26, s'étendant entre la face amont 22 et la face aval 24, à distance du fût 10. De façon analogue, la bride aval 30 présente une face radiale amont 32 (en regard de la bride amont 20) et une face radiale aval 34 (opposée à la face amont 32). La bride aval 30 comprend en outre un sommet annulaire 36, s'étendant entre sa face amont 32 et sa face aval 34, à distance du fût 10.

Ici, le carter de soufflante 1 est réalisé en matériau composite à renfort fibreux densifié par une matrice. Le renfort comprend notamment des fibres de carbone, de verre, d'aramide ou de céramique et la matrice est en polymère, par exemple époxide, bismaélique ou polyimide.

Le renfort peut être formé par enroulement sur un mandrin d'une texture fibreuse réalisée par tissage tridimensionnel avec épaisseur évolutive conformément à la description de la demande FR 2 913 053, le renfort fibreux constituant alors une préforme fibreuse complète du carter de soufflante 1 formée en une seule pièce avec des parties de renfort correspondant aux brides.

Le mandrin comprend une surface externe dont le profil correspond à celui de la surface interne du carter à réaliser, ainsi que deux flasques s'étendant radialement depuis ses extrémités libres adaptés pour former les brides amont et aval du carter de soufflante 1. Par son enroulement sur le mandrin, la texture fibreuse épouse alors le profil du mandrin, de sorte que ses parties d'extrémités forment les parties de préformes correspondant aux brides 20, 30 du carter 1 en prenant appui sur les flasques.

Tout ou partie d'une face interne 12 du fût 10 du carter de soufflante 1 peut être munie d'un revêtement d'isolation, pouvant comprendre un ensemble de panneaux acoustiques. L'ensemble de panneaux acoustiques comprend plusieurs panneaux juxtaposés s'étendant chacun sur un secteur de la face interne 12 du fût 10. De manière conventionnelle, les panneaux peuvent être formés par une structure alvéolaire disposée entre une peau externe appliquée contre face interne 12 du fût 10 et une peau externe multiperforée, les alvéoles étant formées par des cellules dont les parois s'étendent sensiblement radialement entre les peaux. On pourra par exemple se référer au document FR 2 613 773 pour plus de détails sur ces panneaux acoustiques. Les panneaux acoustiques peuvent être fixés au carter de soufflante 1 de façon connue au moyen d'inserts intégrés aux panneaux et de vis.

Afin de protéger le carter de soufflante 1 dans le cas d'une augmentation excessive de la température susceptible de nuire à son bon fonctionnement, notamment en cas de panne ou de feu, une couche de protection 2 à 4 formant une barrière au feu recouvre les zones sensibles du carter de soufflante 1.

En particulier, la couche de protection 2 à 4 est configurée pour limiter l'étendue de la zone dégradée par les flammes et favoriser leur extinction en limitant le champ des températures et le débit la température du gaz dégagé par la dégradation de la matrice du carter de soufflante 1.

De manière générale, il est préférable qu'une couche de protection 2 à 4 recouvre l'ensemble des zones sensibles au feu du carter de soufflante 1.

La zone la plus exposée du carter de soufflante 1 est la face radiale amont 22 de la bride amont 20. Ainsi, dans un exemple de réalisation, seule cette face 22 est recouverte par une couche de protection 2.

La Demanderesse s'est aperçue qu'il suffisait qu'une petite surface sensible au feu du carter de soufflante 1 soit exposée au feu pour que l'intégralité du carter de soufflante 1 soit dégradée. Ainsi, dans une forme de réalisation, toute surface du carter de soufflante 1 susceptible d'être exposée aux flammes et présentant une longueur suivant la direction X supérieure ou égale à 2 mm est de préférence protégée contre le feu. Par exemple, le sommet 26 de la bride amont 20 présente une longueur axiale supérieure à 2 mm, typiquement de l'ordre de 10 mm. Le sommet 26 de la bride amont 20, qui est effectivement susceptible d'être exposée au feu, est donc de préférence recouvert par une couche de protection 3.

Il en est de même pour la face externe 14 du fût 10 du carter de soufflante 1, c'est-à-dire la face 14 du carter de soufflante 1 qui s'étend entre la face aval 24 de la bride amont 20 et la face amont 32 de la bride aval 30, et qui peut être recouverte par une couche de protection 4.

La bride aval 30 en revanche étant habituellement festonnée et donc intrinsèquement mieux protégée contre le feu que la bride amont 20, elle ne requiert pas nécessairement de protection anti-feu et n'est donc pas nécessairement recouverte par une couche de protection. Toutefois, la bride aval 30 peut être recouverte à titre préventif.

La ou les couches de protection 2 à 4 sont de préférence appliquées directement sur le carter de soufflante 1, après que celui-ci ait été fabriqué. Typiquement, les couches de protection 2 à 4 peuvent être appliquées après l'étape de polymérisation de la matrice qui densifie le renfort fibreux.

A cet effet, des lés comprenant des fibres de verre pré-imprégnées sont drapés S1 sur la face radiale amont 22 de la bride amont 20, et le cas échéant sur le sommet 26 de la bride amont 20 et sur la face externe 14 du fût 10. Le drapage est donc réalisé en frais, c'est-à-dire que les lés de fibres de verre pré-imprégnées sont souples et n'ont pas été préalablement polymérisés.

De préférence, plusieurs lés sont superposés afin de former chaque couche de protection 2 à 4. Le nombre de couches de lés peut dépendre de la dimension du carter composite, de la capacité de la couche protectrice à retarder ou du moins ralentir un début de feu, ainsi que du poids total de la couche. Par exemple une dizaine de couches de lés peuvent être drapés sur la face radiale amont 22 de la bride amont 20.

Les lés sont ensuite polymérisés S2, afin de former les couches de protection 2-4. L'étape de polymérisation S2 peut notamment se faire sous pression.

Les fibres de verre sont de préférence pré-imprégnées avec une résine capable de protéger thermiquement le carter de soufflante contre le feu. Par gonflement et délaminage, la résine du pré-imprégné crée une lame d'air entre la couche de protection et la pièce, ce qui réduit le champ des températures et le débit des gaz de décomposition.

La résine du pré-imprégné est choisie de sorte que la polymérisation des lés de fibres de verre pré-imprégnées S2 sur le carter 1 puisse être réalisée à une température inférieure à la température de dégradation du carter 1 qui est de l'ordre de 135°C. Le traitement thermique est réalisé à une température de l'ordre de 120°C. La résine du pré-imprégné est telle que sa température de transition vitreuse est supérieure à la température de fonctionnement moteur sur la zone du carter 1. La résine peut être de classe thermique 180°C. L'adhésion des lés au carter de soufflante 1 est alors obtenue en polymérisant S2 la résine du pré-imprégné au cours d'une étape de post-cuisson du carter de soufflante 1 muni des lés de fibre de verre pré-imprégnées (c'est-à-dire après l'étape de polymérisation de la matrice qui densifie le renfort fibreux du carter de soufflante 1).

De façon tout à fait étonnante, la Demanderesse s'est aperçue que l'utilisation de lés de fibres de verre pré-imprégnés avec des résines désignées comme naturellement auto-extinguibles (par exemple des résines chargées en phosphate d'ammonium) sont difficilement applicables pour des raisons de faisabilité, le drapage de ces lés étant très délicat, pour protéger le carter de soufflante 1 contre le feu. Il s'avère en effet que les résines les plus adaptées sont les résines capables de gonfler sous l'effet de la chaleur, ce qui crée une lame d'air isolante par délaminage du renfort fibreux du carter 1 sous l'effet de la chaleur ce qui réduit le transfert de la chaleur au sein du renfort.. Cela permet d'éviter un endommagement trop rapide du carter 1. L'étendue de la zone dégradée suite à l'exposition au feu est donc plus limitée et le champ de température est moins élevé que dans le cas d'un carter de soufflante 1 ne comprenant pas une telle couche de protection 2-4, de sorte que le débit de gaz dégagé par la dégradation de la résine est moins élevé, ce qui permet aux couches de protection 2 à 4 De ralentir la propagation du feu.

A titre d'exemple non limitatif, la résine utilisée pour les lés peut par exemple comprendre une résine epoxy, une résine phénolique et/ou une résine cyanate ester, telle qu'une résine du type HexPly®M26T/50%035. Pour cette résine, l'étape de polymérisation S2 est réalisée sous une pression de 3 bars à une température de l'ordre de 120°C à 125°C.

De manière avantageuse, la couche de protection 2 permet de simplifier la maîtrise des dimensions finales du carter de soufflante 1 ainsi que les opérations de finition en formant une surépaisseur sacrificielle pouvant être usinée facilement sans pour autant endommager la structure du carter 1, et en particulier la bride amont 20. En effet, le carter de soufflante 1 muni de la couche de protection 2 peut optionnellement subir une étape d'usinage S3 après l'étape de polymérisation S2 de ladite couche de protection 2. La couche de protection 2 peut alors être plus ou moins usinée sur la face amont 22 de la bride amont 20 afin d'ajuster la dimension axiale finale (suivant la direction X) du carter de soufflante 1 en fonction des tolérances dimensionnelles imposées.

De manière optionnelle, une couche de protection peut également être appliquée sur la face aval 24 de la bride amont 20 et sur la face amont 32 de la bride aval 30. Toutefois, le drapage de lés sur ces faces 24, 32 peut s'avérer délicat à réaliser. En effet, de par la configuration annulaire des brides 20, 30, les lés de verre ont tendance à se tendre au niveau de la base incurvée des brides 20, 30 (soit à l'intersection des brides 20, 30 et du fût 10), les caractéristiques géométriques étant difficilement maitrisables.

Selon une forme de réalisation, la protection contre le feu de la face aval 24 de la bride amont 20 et de la face amont 32 de la bride aval 30 peut donc être réalisée en appliquant, sur chacune de ces faces, une contreplaque annulaire 5 pouvant être en titane. La contreplaque annulaire 5 permet alors de protéger la face aval 24 de la bride amont 20 et la face amont 32 de la bride aval 30 contre le feu. Pour chaque face 24, 32, la forme et les dimensions des contreplaques annulaires 5 sont adaptées à la forme et aux dimensions desdites faces 24, 32 correspondantes afin d'assurer un bon contact et une protection optimale desdites faces 24, 32 contre le feu.

Par exemple, les contreplaques annulaires 5 peuvent être fixées contre les faces 24, 32 correspondantes lors du montage, suite aux étapes de drapage S1 et de polymérisation S2 des lés de fibres de verre pré-imprégnées. De préférence, les surfaces sur lesquelles sont fixées les contreplaques de titane 5 sont globalement planes. Pour cela, la face aval 24 de la bride amont 20 et la face amont 32 de la bride aval 30 peuvent être protégées lors de l'étape de drapage S1 par des gabarits adaptés, placés contre lesdites faces 24, 32 au moment du drapage S1 des lés de fibres de verre pré-imprégnées, ce qui permet d'éviter des opérations d'usinage de faces 24, 32 préalablement à la fixation des contreplaques 5.

Dans une autre forme de réalisation, le carter de soufflante 1 peut également comprendre une barrière 6 contre la corrosion galvanique formée sur la face aval 34 et optionnellement sur le sommet 36 de la bride aval 30, afin d'empêcher la corrosion galvanique des pièces métalliques fixées à la bride aval 30, telles que le carter intermédiaire ou la virole annulaire.

La barrière contre la corrosion 6 permet ainsi d'éviter le contact entre les pièces métalliques et le renfort fibreux du carter de soufflante 1, et donc les phénomènes de corrosion galvanique, sans requérir aucune modification supplémentaire du carter de soufflante 1 ou des pièces métalliques.

La barrière contre la corrosion galvanique 6 peut être réalisée à l'aide d'une tresse, d'une bande ou d'une spirale de fibres de verre séchées de manière à obtenir une couche de protection contre la corrosion galvanique semi-rigide, qui est ensuite disposée contre le flasque radial annulaire aval du mandrin préalablement à l'application du renfort fibreux du carter de soufflante 1. La matrice est alors injectée dans les fibres de verre de la barrière 6 et dans le renfort du carter de soufflante 1 puis polymérisée au cours de l'étape de polymérisation du carter de soufflante 1, ce qui permet d'intégrer directement la barrière 6 au carter de soufflante 1. On pourra notamment se référer à la demande FR 1256850 au nom de la Demanderesse pour plus de détails sur ce mode de réalisation.

En variante, afin de limiter le nombre d'étapes de fabrication et de finition du carter de soufflante 1, la barrière 6 peut être réalisée de manière analogue aux couches de protection 2 à 4. En effet, les couches de protection 2 à 4 comprennent des fibres de verre qui forment intrinsèquement une barrière contre la corrosion galvanique et protègent donc les pièces métalliques qui sont éventuellement appliquées contre le carter de soufflante 1. Dans cette variante de réalisation, une couche de protection 6 est donc en outre formée sur la face aval 34 et éventuellement sur le sommet 36 de la bride aval 30, en drapant un ou plusieurs lés de fibres de verre pré-imprégnés sur ces faces 34, 36 de la bride aval 30. Elle protège contre la corrosion galvanique et/ou thermiquement si nécessaire contre le feu.

On notera que, de manière analogue à la couche de protection 2, la barrière contre la corrosion 6 peut participer à la maîtrise des dimensions finales du carter de soufflante 1 ainsi que les opérations de finition en formant une surépaisseur sacrificielle pouvant être usinée facilement afin de rendre le carter 1 conforme aux tolérance dimensionnelles imposées.

Afin d'améliorer encore la protection contre la corrosion galvanique des pièces métalliques fixées en amont et en aval du carter de soufflante 1, la couche de protection 2 et/ou la barrière 6 contre la corrosion peuvent recouvrir une partie 11, 13 de la surface interne du fût 10. Ces parties 11, 13 de la surface interne du fût 10 forment en effet des zones de rétention d'eau qui rendent ces parties 11, 13 sensibles à la corrosion galvanique.

On notera que le nombre de couches de lés peut varier selon les zones du carter de soufflante 1, en fonction du niveau de protection contre le feu désiré pour chaque zone, de l'encombrement admissible et des contraintes de masse. Par exemple, sur la face interne 12 du fût 10, dans les parties 11 et 13 adjacentes aux brides 20 et 30, la couche de protection 2 a pour principale fonction de limiter les phénomènes de corrosion galvanique. Le nombre de couches peut donc être réduit, ce qui permet en outre de ménager un jeu avec les panneaux acoustiques sous-jacents. Par exemple, l'épaisseur de la couche de protection 4a peut être de l'ordre de 0,5 mm dans cette partie 11, afin de ménager un espace de l'ordre de 2,5 mm avec le panneau acoustique.

## Revendications

1. Procédé de protection (S) contre le feu d'un carter de soufflante (1) comprenant un fût (10) globalement cylindrique présentant une direction principale s'étendant selon un axe longitudinal (X) et une bride amont (20) s'étendant radialement par rapport à l'axe longitudinal (X) depuis une extrémité amont du fût (10), le carter de soufflante (1) étant réalisé dans un matériau composite comprenant un renfort fibreux densifié par une matrice, ladite matrice étant polymérisée,
le procédé de protection (S) comprenant les étapes suivantes :
- draper (S1), sur une face radiale amont (22) de la bride amont (20), des lés comprenant des fibres de verre pré-imprégnées avec une résine capable de protéger thermiquement le carter de soufflante contre le feu, et
- polymériser (S2) la résine afin d'obtenir une couche de protection (2).

2. Procédé de protection (S) selon la revendication 1, dans lequel des lés supplémentaires sont également drapés (S1) sur une face externe (14) du fût (10).

3. Procédé de protection (S) selon l'une des revendications 1 ou 2, dans lequel des lés supplémentaires sont également drapés (S1) sur un sommet (26) de la bride amont (20).

4. Procédé selon l'une des revendications 1 à 3, dans lequel des lés supplémentaires sont également drapés contre une face interne (12) du fût (10), dans une partie (11, 13) adjacente à la bride amont (20).

5. Procédé de protection (S) selon la revendication 4, dans lequel davantage de lés supplémentaires sont drapés (S1) sur la face radiale amont (22) de la bride amont (20) que sur la face interne (12) du fût dans la partie (11, 13) adjacente à la bride amont (20).

6. Procédé de protection (S) selon l'une des revendications 2 à 5, dans laquelle les lés supplémentaires sont polymérisés (S2) afin de former des couches de protection supplémentaires contre le feu (3, 5), de préférence en même temps que les lés drapés sur la face radiale amont (22) de la bride amont (20).

7. Procédé de protection (S) selon l'une des revendications 1 à 6, comprenant en outre, suite à l'étape de polymérisation (S2), une étape (S4) au cours de laquelle une contreplaque annulaire (5) en titane est fixée sur une face radiale aval (24) de la bride amont (20).

8. Procédé de protection (S) selon l'une des revendications 1 à 7, dans lequel la résine comprend une résine epoxy, une résine phénolique et/ou une résine cyanate ester.

9. Procédé de protection (S) selon l'une des revendications 1 à 8, comprenant en outre une étape d'usinage (S3) de la face radiale amont de la bride amont (20) afin d'ajuster l'épaisseur de la couche de protection (2).

10. Procédé de protection (S) selon l'une des revendications 1 à 9, le carter de soufflante (1) comprenant en outre une bride aval (30), et le procédé comprend en outre une étape au cours de laquelle une barrière (6) contre la corrosion galvanique est appliquée contre une surface aval (34) de la bride aval.

11. Procédé de protection (S) selon la revendication 10, dans lequel la barrière (6) contre la corrosion galvanique est appliquée selon les étapes suivantes :
- draper (S1), sur une face radiale aval (34) de la bride aval (30), et éventuellement sur le sommet (36), des lés comprenant des fibres de verre pré-imprégnées avec une résine capable de protéger le carter de soufflante, et
- polymériser (S2) la résine afin d'obtenir une couche de protection (6).

12. Carter de soufflante (1) réalisé dans un matériau composite comprenant un renfort fibreux densifié par une matrice, ledit carter de soufflante (1) comprenant un fût (10) globalement cylindrique présentant une direction principale s'étendant selon un axe longitudinal (X) et une bride amont (20) s'étendant radialement par rapport à l'axe longitudinal (X) depuis une extrémité amont du fût (10),
le carter de soufflante (1) étant **caractérisé en ce qu'**il comprend une couche de protection sur une face radiale amont obtenue suivant un procédé de protection (S) selon l'une des revendications 1 à 11.

13. Carter de soufflante (1) selon la revendication 12, comprenant en outre une bride aval (30) s'étendant radialement par rapport à l'axe longitudinal (X) depuis une extrémité aval du fût (10) et une barrière (6) contre la corrosion galvanique sur une face radiale aval (34) obtenue suivant un procédé de protection (S) selon la revendication 10 ou la revendication 11.

## Patentansprüche

1. Brandschutzverfahren (S) für ein Gebläsegehäuse (1), das einen in seiner Gesamtheit zylindrischen Schaft (10), der eine Hauptrichtung aufweist, die sich entlang einer Längsachse (X) erstreckt, und einen vorgeschalteten Flansch (20) umfasst, der sich ausgehend von einem vorgeschalteten Ende des Schaftes (10) radial in Bezug zu der Längsachse (X) erstreckt, wobei das Gebläsegehäuse (1) aus einem Verbundwerkstoff hergestellt ist, das eine faserige Verstärkung umfasst, die durch eine Matrix verdichtet ist, wobei die Matrix polymerisiert ist,
wobei das Schutzverfahren (S) die folgenden Schritte umfasst:
- Umkleiden (S1) auf einer vorgeschalteten radialen Fläche (22) des vorgeschalteten Flansches (20) mit Bahnen, die Glasfasern umfassen, die mit einem Harz vorimprägniert sind, das in der Lage ist, das Gebläsegehäuse thermisch vor Brand zu schützen, und
- Polymerisieren (S2) des Harzes, um eine Schutzschicht (2) zu erhalten.

2. Schutzverfahren (S) nach Anspruch 1, wobei auch zusätzliche Bahnen auf einer äußeren Fläche (14) des Schaftes (10) umkleidet (S1) werden.

3. Schutzverfahren (S) nach einem der Ansprüche 1 oder 2, wobei auch zusätzliche Bahnen auf einer Spitze (26) des vorgeschalteten Flansches (20) umkleidet (S1) werden.

4. Verfahren nach einem der Ansprüche 1 bis 3, wobei zusätzliche Bahnen auch gegen eine innere Fläche (12) des Schaftes (10) in einem dem vorgeschalteten Flansch (20) benachbarten Teil (11, 13) umkleidet sind

5. Schutzverfahren (S) nach Anspruch 4, wobei mehr zusätzliche Bahnen auf der vorgeschalteten radialen Fläche (22) des vorgeschalteten Flansches (20) umkleidet (S1) sind als auf der inneren Fläche (12) des Schaftes im dem vorgeschalteten Flansch (20) benachbarten Teil (11, 13).

6. Schutzverfahren (S) nach einem der Ansprüche 2 bis 5, wobei die zusätzlichen Bahnen, vorzugsweise gleichzeitig wie die auf der vorgeschalteten radialen Fläche (22) des vorgeschalteten Flansches (20) umkleideten Bahnen, polymerisiert (S2) werden, um zusätzliche Brandschutzschichten (3, 5) zu bilden.

7. Schutzverfahren (S) nach einem der Ansprüche 1 bis 6, das ferner im Anschluss an den Schritt des Polymerisierens (S2) einen Schritt (S4) umfasst, während dessen eine ringförmige Gegenplatte (5) aus Titan auf einer nachgeschalteten radialen Fläche (24) des vorgeschalteten Flansches (20) befestigt wird.

8. Schutzverfahren (S) nach einem der Ansprüche 1 bis 7, wobei das Harz ein Epoxidharz, ein Phenolharz und/oder ein Cyanatesterharz umfasst.

9. Schutzverfahren (S) nach einem der Ansprüche 1 bis 8, das ferner einen Schritt zum Bearbeiten (S3) der vorgeschalteten radialen Fläche des vorgeschalteten Flansches (20) umfasst, um die Dicke der Schutzschicht (2) anzupassen.

10. Schutzverfahren (S) nach einem der Ansprüche 1 bis 9, wobei das Gebläsegehäuse (1) ferner einen nachgeschalteten Flansch (30) umfasst und das Verfahren ferner einen Schritt umfasst, während dessen eine Sperre (6) gegen galvanische Korrosion gegen eine nachgeschaltete Oberfläche (34) des nachgeschalteten Flansches aufgebracht wird.

11. Schutzverfahren (S) nach Anspruch 10, wobei die Sperre (6) gegen galvanische Korrosion gemäß den folgenden Schritten aufgebracht wird:
- Umkleiden (S1) auf einer nachgeschalteten radialen Fläche (34) des nachgeschalteten Flansches (30) und gegebenenfalls auf der Spitze (36) mit Bahnen, die Glasfasern umfassen, die mit einem Harz vorimprägniert sind, das in der Lage ist, das Gebläsegehäuse zu schützen, und
- Polymerisieren (S2) des Harzes, um eine Schutzschicht (6) zu erhalten.

12. Gebläsegehäuse (1), das aus einem Verbundwerkstoff hergestellt ist, das eine faserige Verstärkung umfasst, die durch eine Matrix verdichtet ist, wobei das Gebläsegehäuse (1) einen in seiner Gesamtheit zylindrischen Schaft (10), der eine Hauptrichtung aufweist, die sich in einer Längsachse (X) erstreckt, und einen vorgeschalteten Flansch (20) umfasst, der sich in Bezug zu der Längsachse (X) von einem vorgeschalteten Ende des Schaftes (10) radial erstreckt,
wobei das Gebläsegehäuse (1) **dadurch gekennzeichnet ist, dass** es eine Schutzschicht auf einer vorgeschalteten radialen Fläche umfasst, die gemäß einem Schutzverfahren (S) nach einem der Ansprüche 1 bis 11 erhalten wird.

13. Gebläsegehäuse (1) nach Anspruch 12, das ferner einen nachgeschalteten Flansch (30), der sich von einem nachgeschalteten Ende des Schaftes (10) radial zur Längsachse (X) erstreckt, und eine Sperre (6) gegen galvanische Korrosion auf einer nachgeschalteten radialen Fläche (34) umfasst, die gemäß einem Schutzverfahren (S) nach Anspruch 10 oder Anspruch 11 erhalten wird.

## Claims

1. A fire protection method (S) for a fan casing (1) comprising an overall cylindrical barrel (10) having a main direction extending along a longitudinal axis (X) and an upstream flange (20) radially extending relative to the longitudinal axis (X) from an upstream end of the barrel (10), the fan casing (1) being made of composite material comprising a fiber reinforcement densified by a matrix, said matrix being polymerized,
the protection method (S) comprising the following steps:
- draping (S1), on an upstream radial face (22) of the upstream flange (20), panels comprising prepreg glass fibers with a resin capable of thermally protecting the fan casing against fire, and
- polymerizing (S2) the resin to obtain a protective layer (2).

2. The protection method (S) according to claim 1, wherein supplementary panels are also draped (S1) on an outer face (14) of the barrel (10).

3. The protection method (S) according to one of claims 1 or 2, wherein supplementary panels are also draped (S1) on a top (26) of the upstream flange (20).

4. The method according to one of claims 1 to 3, wherein supplementary panels are also draped against an inner face (12) of the barrel (10), in a part (11, 13) adjacent to the upstream flange (20).

5. The protection method (S) according to claim 4, wherein more supplementary panels are draped (S1) on the upstream radial face (22) of the upstream flange (20) than on the inner face (12) of the barrel in the part (11, 13) adjacent to the upstream flange (20).

6. The protection method (S) according to one of claims 2 to 5, wherein the supplementary panels are polymerized (S2) to form supplementary protective layers against fire (3, 5), preferably at the same time as the panels are draped on the upstream radial face (22) of the upstream flange (20).

7. The protection method (S) according to one of claims 1 to 6, further comprising, following the polymerization step (S2), a step (S4) during which an annular counter plate (5) made of titanium is fixed on a downstream radial face (24) of the upstream flange (20).

8. The protection method (S) according to one of claims 1 to 7, wherein the resin comprises an epoxy resin, a phenolic resin and/or a cyanate ester resin.

9. The protection method (S) according to one of claims 1 to 8, further comprising a machining step (S3) of the upstream radial face of the upstream flange (20) so as to adjust the thickness of the protective layer (2).

10. The protection method (S) according to one of claims 1 to 9, the fan casing (1) further comprising a downstream flange (30), and the method further comprises a step during which a barrier (6) against galvanic corrosion is applied against a downstream surface (34) of the downstream flange.

11. The protection method (S) according to claim 10, wherein the barrier (6) against galvanic corrosion is applied according to the following steps:
- draping (S1), on a downstream radial face (34) of the downstream flange (30), and optionally on the top (36), panels comprising prepreg glass fibers with a resin capable of protecting the fan casing, and
- polymerizing (S2) the resin to obtain a protective layer (6).

12. A fan casing (1) made of composite material comprising a fiber reinforcement densified by a matrix, said fan casing (1) comprising an overall cylindrical barrel (10) having a main direction extending along a longitudinal axis (X) and an upstream flange (20) radially extending relative to the longitudinal axis (X) from an upstream end of the barrel (10),
the fan casing (1) being **characterized in that** it comprises a protective layer on an upstream radial face obtained as per a protection method (S) according to one of claims 1 to 11.

13. The fan casing (1) according to claim 12, further comprising a downstream flange (30) radially extending relative to the longitudinal axis (X) from a downstream end of the barrel (10) and a barrier (6) against galvanic corrosion on a downstream radial face (34) obtained via a protection method (S) according to claim 10 or claim 11.
